## Europäisches Patentamt
## European Patent Office
## Office européen des brevets

(19)

(11) Numéro de publication: **0 007 612**
**B1**

(12) **FASCICULE DE BREVET EUROPEEN**

(45) Date de publication du fascicule du brevet: **10.11.82**

(51) Int. Cl.³: **G 05 D 23/19, F 24 D 11/02**

(21) Numéro de dépôt: **79102609.9**

(22) Date de dépôt: **24.07.79**

(54) **Dispositif de régulation de la température d'un local chauffé par pompe à chaleur.**

(30) Priorité: **31.07.78 FR 7822616**

(43) Date de publication de la demande:
**06.02.80 Bulletin 80/3**

(45) Mention de la délivrance du brevet:
**10.11.82 Bulletin 82/45**

(84) Etats contractants désignés:
**AT BE CH DE FR GB IT LU NL SE**

(56) Documents cités:
**DE - A - 1 907 650**
**DE - A - 2 517 610**
**FR - A - 2 222 613**
**FR - A - 2 258 595**
**FR - A - 2 304 261**
**FR - A - 2 375 554**

(73) Titulaire: **Société Anonyme dite SAFT**
**156, avenue de Metz**
**F-93230 Romainville (FR)**

(72) Inventeur: **Godard, Pierre**
**32 sixième Avenue**
**F-93290 Tremblay les Gonesse (FR)**
Inventeur: **Geoffroy, Jean-Claude**
**4 Résidence Faidherbe**
**F-93700 Drancy (FR)**

(74) Mandataire: **Weinmiller, Jürgen et al,**
**Zeppelinstrasse 63**
**D-8000 München 80 (DE)**

Courier Press, Leamington Spa, England.

### Dispositif de régulation de la température d'un local chauffé par pompe à chaleur

La présente invention concerne un dispositif de régulation de la température d'un local chauffé principalement par une pompe à chaleur mais disposant d'un dispositif de chauffage d'appoint.

Dans ce qui suit, on admettra pour la commodité de l'exposé, que la pompe à chaleur est une pompe à éléments Peltier traversés par un courant $I_p$ et que la variation de l'intensité de ce courant entraîne des variations corrélatives de la quantité de chaleur fournie par la pompe. Une telle pompe est connue, voir par exemple le document DE—A—19 07 650.

Il est clair que l'utilisation de tout autre type de pompe entre dans le cadre de la présente invention. Il suffit qu'il existe dans le circuit de commande de cette pompe un circuit électrique dont le réglage du courant provoque dans le même sens le réglage du débit de chaleur de la pompe.

De même, on admettra que le chauffage d'appoint comprend une résistance de chauffe traversée par un courant électrique $I_R$ dont les variations entraînent des variations dans le même sens de la quantité de chaleur fournie par le chauffage d'appoint. Ce courant $I_R$ peut être le courant qui traverse des radiateurs électriques, et c'est l'exemple qui sera choisi dans la suite. Mais ce peut être en variante le courant d'alimentation d'une pompe débitant un combustible liquide dans un chauffage d'appoint à mazout ou analogue. La combinaison d'une chauffage principal par pompe à chaleur avec un chauffage d'appoint par résistance électrique est également connue, voir par exemple le document FR—A—22 58 595.

Un but de l'invention est de réaliser un réglage de la température d'un local évitant les oscillations de la température du local autour de la température de consigne, mais permettant au contraire d'atteindre cette température sans à-coups de fonctionnement de la pompe à chaleur.

Un autre but de l'invention est de réaliser un réglage de la température du local qui tienne compte de la température du fluide de la pompe à chaleur qui emprunte des calories à la source froide. Ce fluide sera désigné à la suite par le terme fluide échangeur.

Dans une pompe à effet Peltier, le fluide échangeur est généralement de l'eau munie d'antigel le plus souvent. Cependant, on sait qu'il est dangereux de laisser descendre la température de cette eau en dessous de 0°C en raison des risques de givrage du fluid échangeur. Voir par exemple le document FR—A—23 04 261 qui utilise un réguleteuz proportionnel pouz evitez ce dangez. Aussi le dispositif de régulation selon l'invention prévoit-il une opération classique de diminution du courant $I_p$ dans le pompe lorsque la température $\theta$ de l'eau descend au dessous d'une valeur donnée $\theta_1 + \Delta\theta_1$,

$\theta_1$ étant proche de la température de gel (1 degré Celsius par exemple) et $\Delta\theta_1$ étant de quelques degrés.

La diminution du courant $I_p$ provoque une diminution de la quantité de chaleur empruntée par l'eau à la source froide et, de ce fait, permet de stabiliser la température de cette eau et d'éviter le givrage. A la limite $\theta_1$, le courant de la pompe est annulé. Dans l'intervalle $\theta_1$, $\theta_1 + \Delta\theta_1$, le courant de la pompe est une fonction $f_1(\theta)$.

Le dispositif est agencé également de manière à faire diminuer le courant $I_p$ de la pompe lorsque la température t du local atteint une valeur proche de la température $t_1$ de consigne du local.

Cette température à partir de laquelle le courant $I_p$ de la pompe diminue est égale à $t_1 - \Delta t_1$. Le courant de la pompe est complètement annulé lorsque la température du local atteint la valeur $t_1$.

Pour assurer une stabilité de la régulation, le dispositif prévoit, de manière connue, de donner au courant dans la pompe $I_p$ la plus basse des deux valeurs correspondant, d'une part à la valeur $\theta$ de la température actuelle du fluide d'échange de la pompe, d'autre part à la température actuelle t du local.

Le dispositif prévoit, de manière connue, de diminuer l'intensité du courant $I_R$ du chauffage d'appoint lorsque la température du local attient une valeur $t_1 - \Delta t_2$ et d'annuler complètement cette intensité lorsque la valeur atteinte est égale à $t_1 - (\Delta t_2 - \Delta t_3)$, avec $\Delta t_2$ supérieur à $\Delta t_3$.

Dans ce qui précède $\Delta t_1$, $\Delta t_2$ et $\Delta t_3$ sont des intervalles de quelques degrés.

L'invention a donc pour objet un dispositif de régulation de la température t d'un local chauffé au moyen d'une pompe à chaleur fonctionnant avec un fluide échangeur à une température $\theta$ dont la valeur ne doit pas s'abaisser au-dessous d'une température $\theta_1$, et au moyen d'un chauffage d'appoint, $t_1$ étant la température du local que l'on désire atteindre, le dispositif comprenant des premiers moyens pour limiter l'intensité du courant $I_p$ de la pompe à chaleur à la plus basse de deux valeurs, la première déterminée par une fonction croissante $f_1$ de $\theta$ lorsque $\theta$ est compris entre $\theta_1$ et $(\theta_1 + \Delta\theta_1)$, $\Delta\theta_1$ étant un intervalle donné et constant de température de quelques degrés, la seconde déterminée par une fonction $f_2$ décroissante de la température t du local lorsque t est compris entre une température $t_1 - \Delta t_1$, $\Delta t_1$ étant un intervalle donné et constant de température de quelques degrés, et $t_1$ la valeur de la température t du local pour laquelle ladite intensité $I_p$ s'annule, et la dispositif comprenant des seconds moyens pour faire varier l'intensité du courant $I_R$ du chauffage d'appoint selon une fonction décroissante de la température t lorsque t est compris entre $t_1 - \Delta t_2$ et $t_1 - (\Delta t_2 - \Delta t_3)$, $\Delta t_2$ et $\Delta t_3$ étant des intervalles donnés de température de quelques

degrés et $\Delta t_2 - \Delta t_3$ étant toujours positif, et annuler l'intensité $I_R$ du chauffage d'appoint lorsque la valeur $(t_1 - (\Delta t_2 - \Delta t_3)$ de t est atteinte, caractérisé par le fait que $\Delta t_3$ est constant et que des troisièmes moyens sont prévus pour faire varier la valeur de l'intervalle $\Delta t_2$ en fonction de l'intensité du courant $I_P$ de la pompe à chaleur quand celle-ci travaille dans la zone dans laquelle la température du fluide échangeur est comprise entre $\theta_1$ et $\theta_1 + \Delta\theta_1$.

Selon un mode particulier de réalisation de l'invention, l'intervalle $t_1 - (\Delta t_2 - \Delta t_3)$ est choisi de telle sorte qu'à chaque valeur $\theta$ de la température, l'égalité

$$f_1(\theta) = f_2(t_1 - (\Delta t_2 - \Delta t_3))$$

soit vérifiée. Grâce à quoi le courant $I_P$ de la pompe reste à sa valeur maximale permise par la température $\theta$ tant que le courant $I_R$ du chauffage d'appoint n'est pas nul et commence à décroître en fonction de t lorsque le courant $I_R$ d'appoint s'annule.

Selon l'invention, l'intervalle $\Delta t_3$ est choisi constant. De la sorte, le taux de décroissance de l'intensité $I_R$ du chauffage d'appoint est le même, quelle que soit la valeur de la température t du local à partir de laquelle cette décroissance doit intervenir. On obtient ainsi un premier facteur favorable à une régulation sans à-coups.

Selon une autre caractéristique de l'invention, on choisit l'intervalle $\Delta t_2$ de manière qu'il soit une fonction croissant du courant $I_P$ de la pompe.

On choisit de préférence une valeur $(t_1 - (\Delta t_2 - \Delta t_3)$ telle qu'elle corresponde, pour une valeur donnée $\theta_0$ de la température du fluide échangeur, à deux valeurs égales du courant de la pompe

$$f_1(\theta_0) = f_2(t_1 - (\Delta t_2 - \Delta t_3)).$$

Enfin, il est simple, donc avantageux, de choisir des fonctions $f_1$ et $f_2$ linéaires.

L'invention sera bien comprise par les explications données ci-après en référence au dessin annexé dans lequel:

— la figure 1 est un schéma synoptique du dispositif selon l'invention,

— les figures 2a et 2b montrent deux diagrammes concernant le fonctionnement du dispositif selon la figure 1,

— la figure 3 est une schéma électrique d'un mode de réalisation du dispositif selon l'invention.

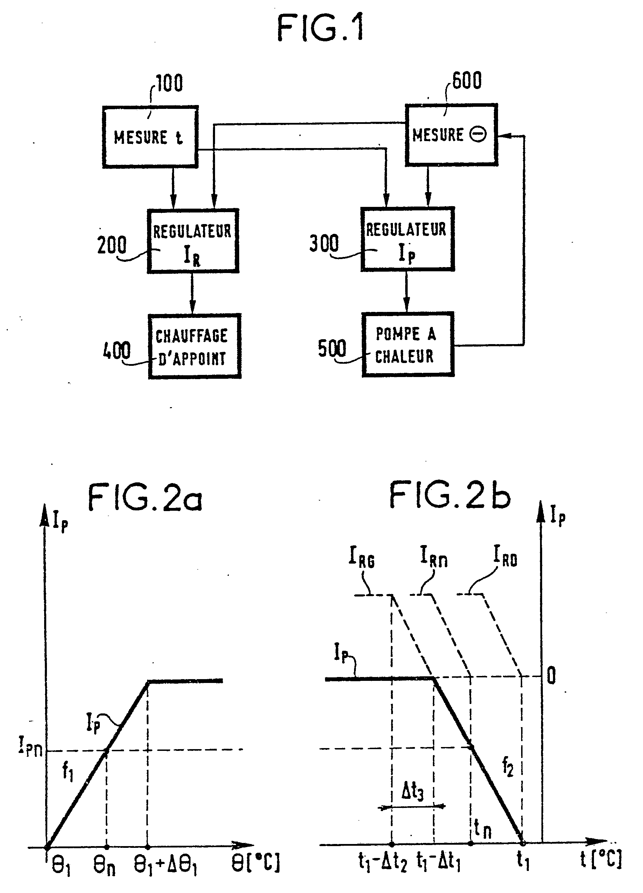

Dans la figure 1, le rectangle 100 symbolise le circuit de mesure de la température du local.

L'information de ce circuit 100 est adressée d'une part à un circuit 200 de régulation du courant $I_R$ du chauffage d'appoint, d'autre part à un circuit 300 de régulation du courant $I_P$ de la pompe à chaleur, les références 400 et 500 désignent respectivement le chauffage d'appoint et la pompe à chaleur. Le rectangle 600 symbolise le circuit de mesure de la température $\theta$ du fluide échangeur de la pompe à chaleur; l'information de ce circuit est transmise à la fois au circuit 200 de régulation du courant $I_R$ du chauffage d'appoint et au circuit 300 de régulation du courant $I_P$ de la pompe à chaleur.

Les diagrammes de la figure 2 permettent d'expliciter l'invention.

On trouve, en abscisses la température $\theta$ du fluide d'échange de la pompe (figure 2a) et la température t du local (figure 2b), exprimées en degrés Celsius.

La courbe en trait épais représente la courant $I_P$ dans la pompe.

Ce courant $I_P$ est régulé au moyen d'une part de l'information relative à la température $\theta$ du fluide d'échange, d'autre part de l'information relative à la température t du local.

La valeur du courant $I_P$ est soumise à deux contraintes:

d'une part, il doit diminuer lorsque la température du fluide d'échange descend au-dessous d'une valeur donnée $\theta_1 + \Delta\theta_1$, pour éviter, comme on l'a vu, les risques de givrage et de gel.

A titre d'exemple, $\theta_1$ peut être égal à 1°C et $\Delta\theta_1$ à 4°C. Le diagramme représente la courbe de la fonction $I_P = f_1(\theta)$ entre $\theta_1$ et $\theta_1 + \Delta\theta_1$, fonction croissante qui peut être une droite, comme il est représenté dans la figure 2,

d'autre part, le courant $I_P$ la pompe doit diminuer à l'approche de la valeur de consigne $t_1$ de la température à maintenir dans la local. Ceci permet une approche sans à-coups de la température $t_1$ de consigne.

La valeur de la température à laquelle cette décroissance intervient est $t_1 - \Delta t_1$; $t_1$ peut par exemple être égal à 20°C et $\Delta t_1$ égal à 2°C. Le diagramme représente la courbe de la fonction $I_P = f_2(t)$ entre $t_1$ et $t_1 - \Delta t_1$, fonction décroissante qui peut être une droite, comme illustré dans la figure 2.

En dehors des zones limites correspondant aux fonctions $f_1$ et $f_2$, le courant $I_P$ de la pompe a une valeur constante $I_P$ (max) choisie de manière à assurer le meilleur fonctionnement de la pompe. Cette valeur est fournie par le constructeur de la pompe.

Le diagramme représente également, dans la partie 2b les variations du courant $I_R$ de chauffage d'appoint.

Pour obtenir une régulation sans à-coup, on prévoit d'utiliser le chauffage d'appoint de la manière suivante:

a) la valeur du courant $I_R$ de chauffage d'appoint est maintenue constante, lorsque la température du local est inférieure à une valeur $t_1 - \Delta t_2$,

b) il s'annule lorsque la température du local est égale ou supérieure à une valeur $t_1 - (\Delta t_2 - \Delta t_3)$, avec $\Delta t_2 - \Delta t_3$ toujours positif,

c) il suit une courbe décroissante, pouvant être une droite comme il a été représenté, entre les deux valeurs précitées de la température du local.

On choisit $\Delta t_3$ constant. Ce peut être par exemple 1°C.

Mai selon une caractéristique de l'invention, on fait en sorte que $\Delta t_2$ soit une fonction du courant $I_P$ de la pompe à chaleur, autrement dit, la température t du local à partir de laquelle on commence à diminuer le courant $I_R$, c'est-à-dire l'intervalle de température $t_1 - \Delta t_2$ est une fonction décroissante du courant dans la pompe.

Cette disposition permet de réguler en utilisant au maximum le chauffage produit par la pompe et économise le chauffage d'appoint qui est plus cher.

Comme on a choisi $\Delta t_3$ constant, ceci revient à avoir un réseau de courbes $I_R$ (de droites $I_R$ dans le cas de décroissance linéaire comme dans l'hypothèse du diagramme) qui sont parallèles les unes aux autres, entre une courbe extrême $I_{RG}$ à gauche du diagramme correspondant à $\theta = \theta_1 + \Delta\theta_1$ et une courbe extrême $I_{RD}$ à droite correspondant à $\theta = \theta_1$. Ce réseau de courbes est tel qu'on ait, comme on a vu, pour toutes les valeurs de $\theta$ comprises dans l'intervalle $\theta_1, \theta_1 + \Delta\theta_1$, l'égalité.

$$f_1(\theta) = f_2(t_1 - (\Delta t_2 - \Delta t_3)):$$

— Lorsque $\theta = \theta_1$, les deux membres de cette égalité prennent la valeur $0 = f_2(t_1)$, d'où $t_1 - (\Delta t_2 - \Delta t_3) = t_1$ et $\Delta t_2 = \Delta t_3$, le courant $I_R$ décroît alors selon la courbe $I_{RD}$ depuis la température $t_1 - \Delta t_3$ jusqu'à la température $t_1$;
— Lorsque $\theta = \theta_1 + \Delta\theta_1$, les deux membres de cette égalité prennent la valeur $I_P$ $(max) = f_2(t_1 - \Delta t_1)$ d'où $\Delta t_2 = \Delta t_1 + \Delta t_3$, le courant $I_R$ décroît alors selon la courbe $I_{RG}$ de $t_1 - \Delta t_1 - \Delta t_3$ à $t_1 - \Delta t_1$;
— et lorsque $\theta$ présente une valeur intermédiaire $\theta_n$ correspondant à un courant de pompe $I_{Pn} = f_2(t_n)$, $I_R$, décroît selon une courbe intermédiaire de $t_n - \Delta t_3$ à $t_n$.

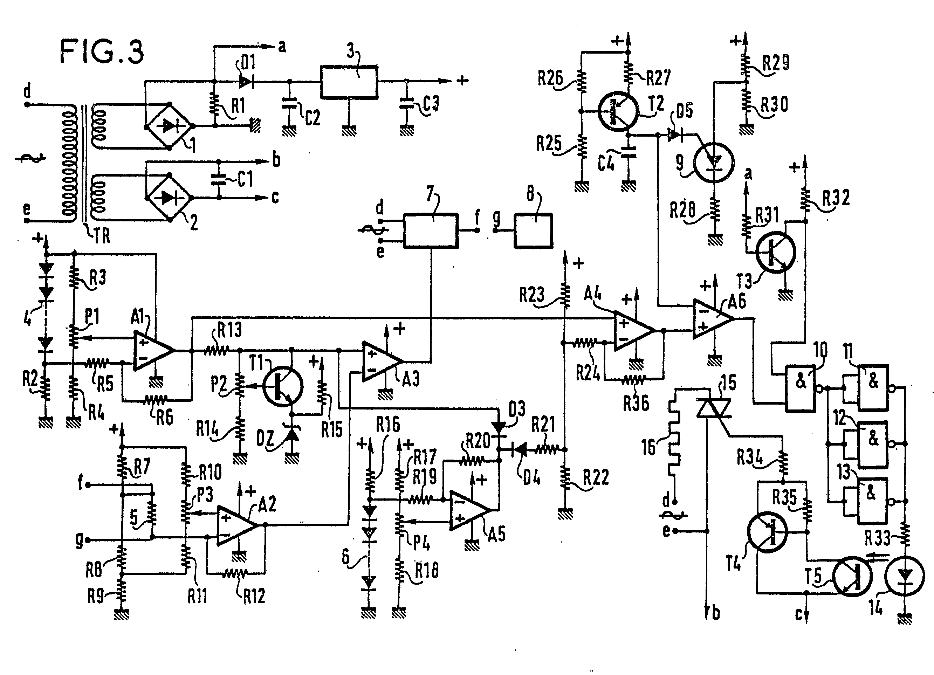

La figure 3 représente un schéma de réalisation électronique du dispositif selon l'invention.

Dans la figure 3, la référence TR désigne un transformateur alimenté par le secteur d, e; aux bornes des deux secondaires sont connectés deux redresseurs 1 et 2 respectivement.

Les deux secondaires sont nécessaires pour découpler électriquement, comme on le verra plus loin, le circuit de puissance du chauffage d'appoint et le circuit de régulation.

L'une des sorties du redresseur 1 est connectée à la masse. L'autre sortie est connectée à travers une diode D1 à une entrée d'un circuit de régulation de courant 3 dont la sortie aboutit à une borne positive+qui fournit donc un courant régulé.

Des condensateurs C2 et C3 de part et d'autre du circuit 3 et une résistance R1 règlent la tension à la sortie de redresseur 1. Une borne a est directement reliée au redresseur 1.

Le redresseur 2 dont la tension est réglée par un condensateur C1 a ses sorties connectées respectivement à des bornes b et c.

Les deux redresseurs 1 et 2 alimentent respectivement le circuit de régulation du courant $I_P$ de la pompe à chaleur et le circuit de commande de mise en service de la résistance d'appoint.

Une série de 10 diodes au silicium 4 sert de sonde pour mesurer la température t du local à réchauffer. Les diodes sont connectées, d'un côté, à la borne+et, d'autre côté, à travers une résistance R2 à la masse. La tension du point de connexion entre la résistance R2 et la série des diodes 4 est transmise par une résistance R5 à une entrée d'un amplificateur différentiel A1. L'autre entrée de l'amplificateur A1 est reliée au curseur d'un potentiomètre P1 qui fait partie avec les résistances R3 et R4 d'un diviseur de tension, ledit diviseur de tension étant connecté entre la borne+et la masse. Comme on le verra, le potentiomètre P1 sert à fixer la valeur de consigne $t_1$ de la température t du local à chauffer. C'est pourquoi son curseur est accessible à l'utilisateur et gradué en degrés. Une résistance R6 entre la résistance R5 et la sortie de l'amplificateur A1, et les prises d'alimentation de A1 à la borne+et à la masse, complètent les circuits de l'amplificateur A1. La tension aux bornes des diodes 4, qui correspond à la mesure de la température t du local et celle fixée par la position du curseur du potentiomètre P1 qui correspond à la température $t_1$ de consigne du local, sont donc comparées par l'amplificateur A1.

Cette information est transmise à une entrée d'un amplificateur A3 à traverse une résistance R13. Entre le point commun de la résistance R13 et de l'amplificateur A3 d'une part et la masse d'autre part sont connectés un potentiomètre P2 et une résistance R14. Le curseur du potentiomètre P2 est connecté à la base d'un transistor npn T1. L'émetteur du transistor T1 est connecté à la borne+par une résistance R15 et à la cathode d'une diode de Zener DZ, dont l'anode est connectée à la masse. Le collecteur du transistor T1 est connecté au point commun de la résistance R13 et de l'amplificateur A3. L'amplificateur A3 est alimenté entre la borne+et la masse. Sa sortie est connectée à un circuit 7 qui contrôle la quantité de courant fournie à la pompe à chaleur 8 à travers les bornes f et g, le circuit 7 étant lui-même alimenté par le secteur d, e.

Une résistance shunt 5 est insérée entre les bornes f et g de telle sorte qu'elle est traversée par le courant d'alimentation de la pompe 8.

Une des bornes du shunt 5 est connectée au point commun de deux résistances R7 et R8 qui, avec une résistance R9 forment un diviseur de tension entre la borne+et la masse.

L'autre borne de shunt 5 est reliée à une entrée d'un amplificateur opérationnel A2. Le second entrée de l'amplificateur A2 est reliée au curseur d'un potentiomètre P3 qui forme avec les résistances R10, R11 et R9 un autre diviseur de tension entre la borne+et la masse. Les prises d'alimentation entre la borne et la masse, et une résistance R12 entre le point commun du shunt 5 et de l'entrée de l'amplificateur d'une part et la sortie de l'amplificateur A2 d'autre part, complètent les circuits de cet amplificateur. La sortie de l'amplificateur A2 est reliée à la seconde entrée de l'amplificateur A3.

Une seconde série de diodes au silicium 6 est en relation avec le fluide de la pompe à chaleur pour déterminer sa température.

Elle est située entre la borne+et la masse par l'intermédiaire d'une résistance R16 et sa tension est transmise par l'intermédiaire d'une résistance R19 à une entrée d'un amplificateur A5. La seconde entrée de l'amplificateur A5 est connectée au curseur d'un potentiomètre P4 qui forme avec des resistances R17 et R18 un diviseur de tension entre la borne+et la masse. Une résistance R20 entre le point commun de la résistance R19 et de l'amplificateur A5 d'une part et la sortie de l'amplificateur A5 d'autre part, ainsi que les prises d'alimentation de A5 A6 la borne+et à la masse complètent les circuits de l'amplificateur A5.

La sortie de l'amplificateur A5 est connectée à travers une diode D3 à l'entrée de l'amplificateur A3 également connectée à la sortie de l'amplificateur A1.

La commande déliverée par la sortie de l'amplificateur A3 détermine la valeur du courant qui actionne la pompe à chaleur. Cette valeur dépend d'une part de l'information fournie par l'amplificateur A1 qui est proportionnelle à la différence entre la tension des diodes 4, donc la température du local à chauffer, et la tension prélevée sur le potentiomètre P1 qui correspond à la température de consigne pour le local. Cependent la diode de Zener DZ fixe une tension qui, lorsqu'elle est atteinte à la base du transistor T1 rend celui-ci conducteur et limite la tension fournie à l'entrée de A3. On fixe ainsi une valeur maximale du courant d'alimentation de la pompe à chaleur. De même, la différence entre la tension des diodes 6 qui correspond à la température du fluide de la pompe et la tension prélevée sur le potentiomètre P4 rend le courant fourni à la pompe proportionnel à la différence entre la température du fluide de la pompe et la valeur de consigne fixée par le position du curseur de P4. Ansi le courant de la pompe décroît quand la température du fluide décroît.

Les circuits de commande et la régulation de la résistance de chauffage direct vont maintenant être examinés.

Cette résistance est représentée en 16, alimentée en 220 volts alternatif aux bornes d et e, à travers un triac 15. L'électrode de commande du triac 15 est connectée à une borne d'une résistance R34 dont l'autre borne est connectée d'une part à une borne d'une résistance R35 et d'autre par à l'émetteur d'un transistor pnp T4.

Le collecteur de T4 est connecté à la borne c et sa base est connectée à l'autre borne de la résistance R35. Cette autre borne de la résistance R35 est connectée au collecteur d'un phototransistor npn T5 dont l'émetteur est relié à la borne c. La borne b est reliée à une électrode du triac 15.

Le phototransistor T5 reçoit la lumière d'une diode électroluminescente 14 dont la cathode est connectée à la masse et dont l'anode reçoit à travers une résistance R33 le courant de trois portes NON-ET 11, 12 et 13 montées en inverseurs, dont les entrées reçoivent un signal d'une quatrième porte NON-ET 10.

L'une des entrées de la porte 10 est connectée d'une part à la borne+par une résistance R32 et d'autre part au collecteur d'un transistor npn T3 dont l'émetteur est connecté à la masse et la base est connectée à la borne a par l'intermédiaire d'une résistance R31.

L'autre entrée de la porte 10 reçoit un signal d'un amplificateur opérationnel A6 dont une des entrées est connectée à la sortie d'amplificateur A4. L'une des entrées de l'amplificateur A4 est connectée à la sortie de l'amplificateur A1 et reçoit donc un signal proportionnel à la différence entre la température t du local à chauffer et la valeur t1 de consigne pour cette température. L'autre entrée de l'amplificateur A4 est connectée par l'intermédiaire d'une résistance R24 au point commun de deux résistances R22 et R23 on série entre la borne+et la masse. Le point commun des résistances R22 et R23 est aussi connecté à traverse une résistance R21 à l'anode d'une diode D4 dont la cathode est connectée à la cathode de la diode D3.

Une résistance R36 connectée entre la résistance R24 et l'entrée correspondante de l'amplificateur A4 d'une part et la sortie de cet amplificateur d'autre part, ainsi que les prises d'alimentation entre la borne+et la masse complètent les circuits de l'amplificateur A4.

La seconde entrée de l'amplificateur A6 est connectée à l'anode d'une diode D5 dont la cathode est connectée à la gâchette d'un transistor unijonction programmable (TUP) 9. La cathode du TUP 9 est mise à la masse à traverse une résistance R28 et son anode est connectée au point commun de deux résistances R29 et R30 en série entre la borne+et la masse. La seconde entrée de l'amplificateur A6 est reliée au collecteur d'un transistor pnp T2 qui est en outre relié à la masse à travers un condensateur C4. L'émetteur du transistor T2 est connecté à la borne+par l'intermédiaire d'une résistance R27. Sa base est connectée au point commun de deux résistances R25 et 26 en série entre la borne+et la masse.

Le fonctionnement de cette partie du circuit est le suivant:

Le circuit du TUP 9, de la diode D5 et du transistor T2 fournit une tension en dents de scie qui se superpose dans l'amplificateur A6 à la tension continue fournie par l'amplificateur

A4, et permet ainsi l'amorçage du triac en fonction de l'information fournie par A4. Le circuit du transistor T3 relié à la porte 10 interdit l'amorçage du triac à un autre moment que celui du passage à zéro de la tension d'alimentation pour éviter les perturbations radio.

Le signal délivré par A4 dépend de l'écart de la température ambiante par rapport à la valeur de consigne donnée par le potentiomètre P1 puisqu'il dépend de la valeur du signal de sortie de l'amplificateur A1. Cette valeur est comparée à la tension du diviseur R22 R23 qui introduit un décalage donné par rapport à la valeur de consigne de température du local laquelle est donnée par le potentiomètre P1. La résistance 16 sera par conséquent mise en service ou arrêtée à une température du local qui diffère de la valeur de consigne de mise en route ou d'arrêt de la pompe à chaleur 5 d'une quantité qui est fixe tant que seules les résistances R22 et R23 interviennent pour fixer la tension fournie à l'amplificateur A4. Le signal à la sortie de A4 variera alors de façon continue en fonction de l'écart entre la température ambiante t et la valeur de consigne t1 donnée par le potentiomètre P1, puisque c'est ansi que varie le signal à la sortie de l'amplificateur A1.

Par contre si la température $\theta$ du fluide de pompe, déterminée par les diodes 6, est telle que le signal sortant de l'amplificateur A5 baisse, la tension de référence fournie à l'amplificateur A4 est modifiée par la diode D4 et la résistance R21, et la température d'arrêt ou de mise en service de la résistance est modifiée en conséquence, pour deminuer l'écart de la température ambiante et la température de consigne quand le fluide travaille à la température minimale, par exemple dans les périodes de grand froid.

Si on se reporte à la figure 2, on constate que le schéma de réalisation donné à titre d'exemple dans la figure 3, remplit bien les fonctions décrites. Le palier du courant $I_P$ dans la pompe est fourni par le transistor T1. ·

La fonction $f_1(\theta)$, correspondant à la décroissance du courant $I_P$ dans la pompe lorsque la température $\theta$ du fluide diminuée est réalisée notamment par l'amplificateur A5.

La fonction $f_2(t)$ correspondant à la diminution du courant $I_P$ de la pompe lorsque la température t du local croît est obtenue grâce à l'amplificateur A1.

Enfin, le décalage des diverses courbes $I_{Rn}$ est obtenu par le circuit l'amplificateur A4 recevant les informations de l'amplificateur A5 (température $\theta$ du fluide) et de l'amplificateur A1 (température t du local).

**Revendications**

1. Dispositif de régulation de la température t d'un local chauffé au moyen d'une pompe à chaleur (8) fonctionnant avec un fluide échangeur à une température $\theta$ dont la valeur ne doit pas s'abaisser au-dessous d'une température $\theta_1$, et au moyen d'un chauffage d'appoint (16), $t_1$ étant la température du local que l'on désire atteindre, le dispositif comprenant des premiers moyens (A3) pour limiter l'intensité du courant $I_P$ de la pompe à chaleur à la plus basse de deux valeurs, la première déterminée par une fonction croissante $f_1$ de $\theta$ lorsque $\theta$ est compris entre $\theta_1$ et $(\theta_1+\Delta\theta_1)$, $\Delta\theta_1$ étant un intervalle donné et constant de température de quelques degrés, la seconde déterminée par une fonction $f_2$ décroissante de la température t du local lorsque t est compris entre une température $t_1-\Delta t_1$, $\Delta t_1$ étant un intervalle donné et constant de température de quelques degrés, et $t_1$ la valeur de la température t du local pour laquelle ladite intensité $I_P$ s'annule, le dispositif comprenant des seconds moyens (A4) pour faire varier l'intensité $I_R$ du courant du chauffage d'appoint (16) selon une fonction décroissante de la température t du local lorsque t est compris entre $t_1-\Delta t_2$ et $t_1-(\Delta t_2-\Delta t_3)$, $\Delta t_2$ et $\Delta t_3$ étant des intervalles donnés de température de quelques degrés et $\Delta t_2-\Delta t_3$ étant toujours positif, et annuler l'intensité $I_R$ du chauffage d'appoint lorsque la valeur $t_1-(\Delta t_2-\Delta t_3)$ de t est atteinte, caractérisé par le fait que $\Delta t_3$ est constant et que des troisièmes moyens (A5) sont prévus pour faire varier la valeur de l'intervalle $\Delta t_2$ en fonction de l'intensité du courant $I_P$ de la pompe à chaleur, quand celle-ci travaille dans la zone dans laquelle la temperature du fluide échangeur est comprise entre $\theta_1$ et $\theta_1+\Delta\theta_1$.

2. Dispositif selon la revendication 1, caractérisé par le fait que les troisièmes moyens (A5) sont prévus pour fixer l'intervalle $\Delta t_2$ de telle sorte qu'à chaque valeur $\theta$ de la température du fluide échangeur, l'égalité

$$f_1(\theta)=f_2(t_1-(\Delta t_2-\Delta t_3))$$

soit vérifiée, ce que correspond à deux valeurs égales du courant $I_P$ de la pompe, l'une des valeurs étant valable lorsque la température $\theta$ du fluide échangeur est comprise entre $\theta_1$ et $\theta_1+\Delta\theta_1$, tandis que l'autre est valable lorsque la température du local est comprise entre $t_1$ et $t_1-\Delta t_1$.

3. Dispositif selon l'une des revendications 1 à 2, caractérisée par le fait que les premiers ($A_3$) et seconds moyens ($A_4$) sont tels que les deux fonctions $f_1$ et $f_2$ donnant les valeurs de l'intensité du courant $I_P$ de la pompe sont des fonctions linéaires, tout comme la fonction décroissante de la temperature, t du local donnant l'intensité $I_R$ du chauffage d'appoint.

**Patentansprüche**

1. Vorrichtung zur Regelung der Temperatur t eines mithilfe einer Wärmepumpe (8) beheizten Raums, die mit einem Austauschfluid bei einer Temperatur von $\theta$ arbeitet, deren Wert nicht unter eine Temperatur von $\theta_1$ absinken

darf, und mithilfe einer Zusatzheizung (16), wobei $t_1$ die gewünschte Raumtemperatur ist und die Vorrichtung erste Mittel (A3) für die Begrenzung der Stromstärke $I_P$ der Wärmepumpe auf den niedrigeren zweier Werte aufweist, von denen der erste durch eine steigende Funktion $f_1$ von $\theta$ bestimmt ist, wenn $\theta$ zwischen $\theta_1$ und $(\theta_1+\Delta\theta_1)$ liegt, wobei $\Delta\theta_1$ ein gegebener und konstanter Temperaturabstand von einigen Graden ist, während der zweite durch eine fallende Funktion $f_2$ von der Raumtemperatur t bestimmt ist, wenn t zwischen einer Temperatur $(t_1-\Delta t_1)$, wobei $\Delta t_1$ ein gegebener und konstanter Temperaturabstand von einigen Graden ist, und $t_1$ liegt, der Temperatur t des Raums, bei der der Strom $I_P$ zu Null wird, une wobei die Vorrichtung zweite Mittel (A4) aufweist, mit denen die Stromstärke $I_R$ der Zusatzheizung (16) gemäß einer fallenden Funktion der Raumtemperatur t verändert wird, wenn t zwischen $(t_1-\Delta t_2)$ und $(t_1-(\Delta t_2-\Delta t_3))$ liegt, wobei $\Delta t_2$ und $\Delta t_3$ gegebene Temperaturdifferenzen von einigen Graden sind und $(\Delta t_2-\Delta t_3)$ stets positiv ist, und die Stromstärke $I_R$ der Zusatzheizung zu Null wird, wenn der Wert $(t_1-(\Delta t_2-\Delta t_3))$ von t erreicht ist, dadurch gekennzeichnet, daß $\Delta t_3$ konstant ist und daß dritte Mittel (A5) vorgesehen sind, mit denen der Wert der Differenz $\Delta t_2$ abhängig von der Stromstärke $I_P$ der Wärmepumpe verändert wird, wenn letztere in dem Bereich arbeitet, in dem die Temperatur des Austauschfluids zwischen $\theta_1$ und $(\theta_1+\Delta\theta)$ liegt.

2. Vorrichtung nach Anspruch 1, dadurch gekennzeichnet, daß die dritten Mittel (A5) vorgesehen sind, um den Intervall $\Delta t_2$ so festzulegen, daß bei jedem Wert $\theta$ der Temperatur des Austauschfluids die Gleichung

$$f_1(\theta)=f_2(t_1-(\Delta t_2-\Delta t_3))$$

gilt, was zwei gleichen Werten des Stroms $I_P$ der Pumpe entspricht, wobei einer der Werte gilt, wenn die Temperatur $\theta$ des Austauschfluids zwischen $\theta_1$ und $\theta_1+\Delta\theta_1$ liegt, während der andere gilt, wenn die Temperatur des Raums zwischen $t_1$ und $t_1-\Delta t_1$ liegt.

3. Vorrichtung nach einem der Ansprüche 1 bis 2, dadurch gekennzeichnet, daß die ersten (A3) und zweiten Mittel (A4) so ausgebildet sind, daß die beiden Funktionen $f_1$ und $f_2$, die die Intensitätswerte des Stroms $I_P$ der Pumpe geben, lineare Funktionen sind, genau wie die fallende Funktion der Temperatur t des Raums, die die Stromstärke $I_R$ der Zusatzheizung angibt.

## Claims

1. A device for controlling the temperature t of a space heated by means of a heat pump (8) operating with an exchange fluid at a temperature $\theta$, the value of which must not drop below a temperature $\theta_1$, and by means of an electrically actuated back up heater (16), $t_1$ being the space temperature desired to be achieved, the device including first means (A3) for limiting the current $I_P$ of the heat pump to the lower of two values, the first value being determined by an increasing function $f_1$ of $\theta$, when $\theta$ is between $\theta_1$ and $(\theta_1+\Delta\theta_1)$, $\Delta\theta_1$ being a predetermined constant temperature interval of a few degrees, and the second value being determined by a decreasing function $f_2$ of the space temperature t, when t is between a temperature $t_1-\Delta t_1$, $\Delta t_1$ being a predetermined constant temperature interval of a few degrees and $t_1$ being the temperature value t for which said current $I_P$ becomes zero, and including second means (A4) for varying the current $I_R$ of the back up heater (16) as a decreasing function of the temperature t when t is between $t_1-\Delta t_2$ and $t_1-(\Delta t_2-\Delta t_3)$, $\Delta t_2$ and $\Delta t_3$ being predetermined intervals of a few degrees and $\Delta t_2-\Delta t_3$ being always positive, and for shutting off the current of the back up heater when t reaches the value $t_1-(\Delta t_2-\Delta t_3)$, characterized by the fact that $\Delta t_3$ is a constant value and that third means (A5) are provided for varying the value of $\Delta t_2$ as a function of the current $I_P$ of the heat pump when said pump operates in the zone in which the temperature of the exchange fluid is between $\theta_1$ and $\theta_1+\Delta\theta_1$.

2. A device according to Claim 1, characterized by the fact that the third means (A5) are provided for fixing the value of $\Delta t_2$ in such a way that at each value $\theta$ of the exchange fluid temperature, the equality

$$f_1(\theta)=f_2(t_1-(\Delta t_2-\Delta t_3))$$

is maintained, which corresponds to two equal values of the current $I_P$ of the heat pump, one being valid when the exchange fluid temperature $\theta$ is included between $\theta_1$ and $\theta_1+\Delta\theta_1$, and the other being valid when the space temperature is included between $t_1$ and $t_1-\Delta t_1$.

3. A device according to one of the Claims 1 to 2, characterized in that the first (A3) and second means (A4) are such that the two functions $f_1$ and $f_2$ providing the pump current values $I_P$ are linear functions as well as the decreasing reaction of the space temperature t providing the back up heater current $I_R$.

# FIG.1

100

MESURE t

600

MESURE $\ominus$

200 REGULATEUR $I_R$

300 REGULATEUR $I_P$

400 CHAUFFAGE D'APPOINT

500 POMPE A CHALEUR

## FIG.2a

$I_P$

$I_P$

$f_1$

$I_{Pn}$

$\theta_1$   $\theta_n$   $\theta_1 + \Delta\theta_1$   $\theta[°C]$

## FIG.2b

$I_P$

$I_{RG}$   $I_{Rn}$   $I_{RD}$

$I_P$

0

$f_2$

$\Delta t_3$

$t_n$

$t_1 - \Delta t_2$   $t_1 - \Delta t_1$   $t_1$   $t[°C]$

FIG.3